# FASCICULE DE BREVET EUROPEEN

(11) **EP 2 555 940 B1**
(45) Date de publication et mention de la délivrance du brevet: **28.02.2018**
(21) Numéro de dépôt: 11730349.5
(22) Date de dépôt: 07.04.2011
(51) Int. Cl.: B60K 23/08

(54) **PROCÉDÉ DE COMMANDE DU FONCTIONNEMENT D'UN MOYEN DE COUPLAGE MÉCANIQUE DES PREMIER ET DEUXIÈME ESSIEUX D'UN VÉHICULE AUTOMOBILE**
STEUERVERFAHREN DER FUNKTION EINER MECHANISCHEN KUPPLUNGSEINRICHTUNG DER ERSTEN UND ZWEITEN ACHSEN EINES KRAFTFAHRZEUGS
METHOD OF OPERATING THE FUNCTION OF A MECHANICAL COUPLING DEVICE OF THE FIRST AND SECOND AXLES OF A MOTOR VEHICLE

(30) Priorité: 08.04.2010 FR 1052646
(43) Date de publication de la demande: 13.02.2013
(73) Titulaire: Renault S.A.S., 92100 Boulogne-Billancourt (FR)
(72) Inventeur: GUEGAN, Stéphane, F-78000 Versailles (FR); SAINT LOUP, Philippe, F-78760Jouars Pontchartrain (FR); MONTI, Alessandro, F-92250 La Garenne Colombes (FR); ROMANI, Nicolas, F-75016 Paris (FR)
(86) Numéro de dépôt international: PCT/FR2011/050792
(87) Numéro de publication internationale: WO 2011/124859

(56) Documents cités:
- EP-A2- 1 449 704
- WO-A1-2007/022210
- US-A1- 2004 222 029
- US-A1- 2007 215 428

## Description

La présente invention concerne un procédé de fonctionnement d'un système de transmission du type à quatre roues motrices d'un véhicule automobile et un procédé de commande d'un moyen de couplage mécanique d'un premier essieu à un deuxième essieu d'un système de transmission du type quatre roues motrices d'un véhicule automobile. L'invention porte également sur un système de commande de l'état du moyen de couplage mécanique. Elle porte aussi sur un système de transmission comportant un tel système de commande. Elle porte encore sur un véhicule comprenant un tel système de commande ou un tel système de transmission.

L'invention s'applique à un véhicule équipé d'un système quatre roues motrices pilotées. L'objectif de ce type de véhicule est d'améliorer les prestations telles que la performance et la sécurité. En particulier, l'invention vise à fiabiliser le fonctionnement d'un moyen mécanique de couplage en évitant sa détérioration dans des conditions extrêmes d'utilisation et à augmenter les performances motrices du véhicule équipé du système de transmission.

On connaît un système de transmission du type quatre roues motrices dans lequel un moyen de couplage mécanique d'un essieu avant à un essieu arrière (coupleur) peut fonctionner selon trois états définissant trois modes de fonctionnement du système de transmission.
- un premier mode de transmission où une partie (variable) seulement de la capacité maximale de couple issu d'une source de couple (le moteur du véhicule automobile) et destinée au train arrière est effectivement transmise au train arrière ; ce premier mode dénommé mode « AWD Auto » correspondant à un coupleur dit « piloté », c'est-à-dire qu'un système de commande du coupleur gère automatiquement son fonctionnement, en particulier la quantité de couple transmise ou transmissible,
- un deuxième mode de transmission où la totalité de la capacité maximale de couple issue de la source de couple et destinée au train arrière est effectivement transmise au train arrière ; ce deuxième mode dénommé mode « 4WD Lock » correspondant à un coupleur dit « fermé », c'est-à-dire qu'il est verrouillé dans un état définissant une valeur fixe de couple maximal transmissible,
- un troisième mode de transmission où aucun couple (ou un couple négligeable) issu de la source de couple n'est transmis au train arrière ; ce troisième mode dénommé mode « 2WD » correspondant à un coupleur dit « ouvert », c'est-à-dire que le coupleur est désactivé ou qu'il ne transmet qu'une quantité négligeable de couple.

Le document US 2003/098193 décrit un procédé de répartition de couple entre les trains avant et arrière d'un véhicule en fonction de la différence entre les vitesses de rotation des trains avant et arrière. Ce procédé permet d'améliorer les performances du véhicule en optimisant le glissement sans définir de compromis entre fiabilité et performances.

Le brevet US5247443 décrit un procédé de répartition de couple entre les trains avant et arrière d'un véhicule en fonction de la différence entre les vitesses de rotation des trains avant et arrière, et qui modifie le seuil de détection sur le glissement si le frein de parking est activé. Ce procédé permet d'améliorer les performances du véhicule en optimisant le glissement sans définir de compromis entre fiabilité et performances. Le document US 2007/215428 A1 décrit un procédé selon le préambule de la revendication 1.

Le but de l'invention est de fournir un procédé de commande d'un moyen de couplage mécanique d'essieux permettant de remédier aux problèmes évoqués précédemment et améliorant les procédés de commande connus de l'art antérieur. En particulier, l'invention propose un procédé de commande de moyen mécanique de couplage permettant d'améliorer la fiabilité de fonctionnement d'un moyen de couplage des essieux d'un véhicule automobile du type à quatre roues motrices tout conservant de bonnes performances de franchissement.

Selon l'invention, un procédé de commande du fonctionnement d'un moyen de couplage mécanique des premier et deuxième essieux d'un système de transmission d'un véhicule automobile selon la revendication 1 est proposé. Le système de transmission peut être susceptible de fonctionner selon un troisième mode dans lequel la valeur du couple transmissible est variable et inférieure à la valeur du couple transmissible dans le premier mode.

Le système de transmission peut être susceptible de fonctionner selon un quatrième mode dans lequel la valeur du couple transmissible est nulle ou négligeable.

Le système de transmission peut entrer dans le deuxième mode de fonctionnement lorsque les conditions suivantes sont réunies :
- la valeur du couple requis est égale à la valeur du couple transmissible dans le premier mode, et
- la température, par exemple estimée ou mesurée, du moyen mécanique de couplage est supérieure à une première température seuil, et
- la différence de vitesse des roues des premier et deuxième essieux est supérieure à un premier seuil, et
- la vitesse du véhicule est inférieure à un premier seuil de vitesse.

Le système de transmission peut sortir du deuxième mode de fonctionnement lorsque les conditions suivantes sont réunies :
- la différence de vitesse des roues des premier et deuxième essieux est inférieure à un deuxième seuil ou la vitesse du véhicule est supérieure à un deuxième seuil de vitesse, et
- le premier ou le troisième mode est requis.

Dans le deuxième mode, la valeur du couple transmissible par le moyen mécanique de couplage peut être fixe.

Dans le deuxième mode, la valeur du couple transmissible par le moyen de couplage mécanique peut être variable.

Dans le deuxième mode, la valeur du couple transmissible par le moyen de couplage mécanique peut être dépendante de la différence de vitesse des roues des premier et deuxième essieux, par exemple peut être une fonction affine de la différence de vitesse des roues des premier et deuxième essieux.

Selon l'invention, le procédé régit le fonctionnement d'un système de transmission d'un véhicule automobile. Le système comprend un premier essieu entraîné par défaut et un deuxième essieu entraîné optionnellement selon l'état d'un moyen de couplage mécanique des premier et deuxième essieux. Le procédé de fonctionnement comprend une phase de mise en oeuvre du procédé de commande défini précédemment.

L'invention porte aussi sur un support d'enregistrement de données lisible par un calculateur sur lequel est enregistré un programme informatique comprenant des moyens de codes de programme informatique de mise en oeuvre des étapes du procédé défini précédemment.

Selon l'invention, le système commande l'état d'un moyen de couplage mécanique des premier et deuxième essieux d'un système de transmission d'un véhicule automobile. Le premier essieu est entraîné par défaut et le deuxième essieu est entraîné optionnellement selon l'état du moyen de couplage. Le système comprend des moyens matériels et/ou logiciels de mise en oeuvre du procédé défini précédemment.

Les moyens matériels peuvent comprendre :
- un moyen de détermination du couple requis sur le deuxième essieu,
- optionnellement, un moyen de détermination de la température du moyen mécanique de couplage,
- un moyen de détermination de la différence de vitesse des roues des premier et deuxième essieux, et
- un moyen de détermination de la vitesse du véhicule.

Selon l'invention, le système de transmission d'un véhicule automobile comprend un premier essieu entraîné par défaut et un deuxième essieu entraîné optionnellement selon l'état d'un moyen de couplage mécanique des premier et deuxième essieux et un système de commande du moyen de couplage mécanique défini précédemment.

Selon l'invention, le véhicule automobile comprend un système de commande défini précédemment ou un système de transmission défini précédemment.

L'invention porte aussi sur un programme informatique comprenant un moyen de code de programme informatique adapté à la réalisation des étapes du procédé défini précédemment, lorsque le programme tourne sur un ordinateur.

Le dessin annexé représente, à titre d'exemple, un mode d'exécution d'un procédé de commande selon l'invention et un mode de réalisation d'un système de commande selon l'invention.
La figure 1 est un mode de réalisation d'un véhicule automobile comprenant un système de transmission à quatre roues motrices selon l'invention.
La figure 2 est un graphique illustrant l'effet qu'à l'invention sur un moyen mécanique de couplage des essieux d'un véhicule à quatre roues motrices.
La figure 3 est un schéma d'une architecture logicielle régissant le fonctionnement d'un système de commande et d'un système de transmission selon l'invention et permettant de mettre en oeuvre les procédés selon l'invention.
La figure 4 est un schéma des différents modes dans lesquelles le système de transmission selon l'invention peut fonctionner, ce schéma présentant également les transitions possibles entre ces différents modes.

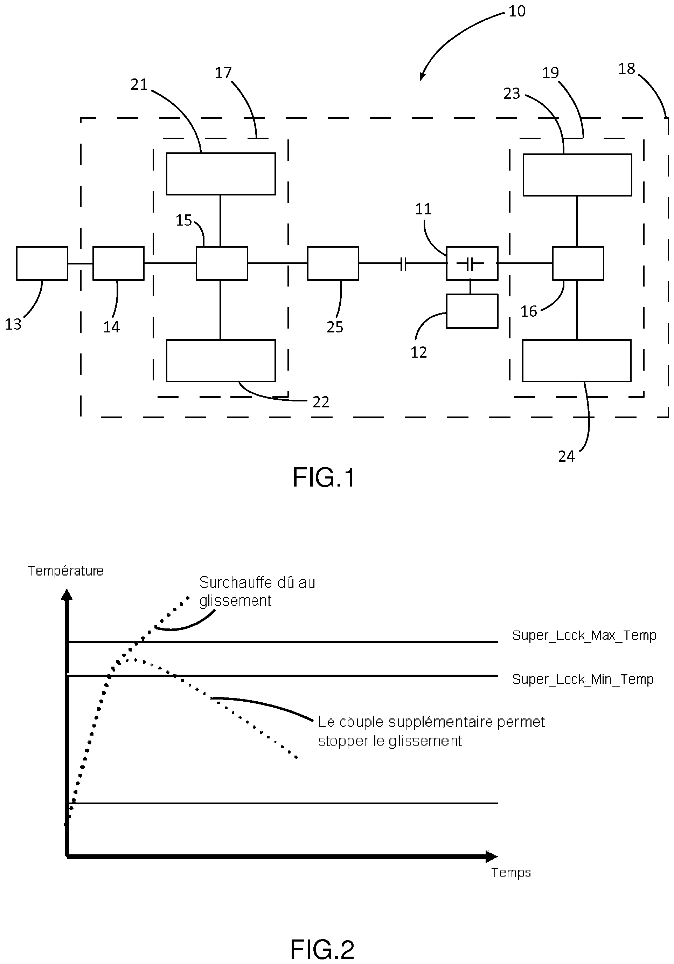

Un mode de réalisation de véhicule automobile 10 selon l'invention représenté à la figure 1 comprend un mode de réalisation d'un système de transmission 18 du type à quatre roues motrices, et en particulier du type à quatre roues motrices pilotées.

Le système de transmission 18 est en liaison mécanique avec un moteur 13 (ou source de couple) d'entraînement du véhicule. Le système de transmission 18 comprend principalement un premier essieu 17 de roues 21, 22 reliées par un différentiel 15 lui-même relié au moteur 13 via une boîte de vitesses 14 et un deuxième essieu 19 de roues 23, 24 reliées par un différentiel 16, le différentiel 16 étant relié au différentiel 15 via une boîte de transfert 25 et un moyen mécanique de couplage (coupleur) 11. Le système de transmission comprend également un système de commande 12 de l'état du moyen mécanique de couplage. Le système de commande comprend un moyen de sélection du mode de fonctionnement du système de transmission et un calculateur.

Bien que non représentés, le système de transmission comprend des moyens de détermination de variables d'état du véhicule, tels que par exemple des moyens d'obtenir la vitesse de rotation de chaque roue, des moyens d'obtenir les informations relatives au freinage (détecteur d'action sur une pédale de frein, détecteur d'action sur un organe de commande de frein de parking, détecteurs d'activation d'un système de contrôle de la stabilité et/ou de la motricité et/ou de l'adhérence du véhicule), et des moyens électroniques ou automatiques de calcul. Le système de transmission comporte un moyen de sélection par l'utilisateur (par exemple au tableau de bord) d'un mode de fonctionnement du système, notamment un premier mode « AWD Auto », un deuxième mode « 4WD Lock » ou un troisième mode « 2WD », un moyen de détection, à partir des variables d'état du véhicule et/ou du système, de la volonté du conducteur et des conditions de roulage (accélération, freinage, glissement...) et un moyen de commande pour commuter le système dans un mode déterminé en fonction du mode sélectionné par le conducteur, de la volonté conducteur et des conditions de roulage du véhicule. Le système de transmission, en particulier le système de commande du moyen de couplage comprend également tous les moyens matériels et/ou logiciels permettant de mettre en oeuvre les procédés objets de l'invention. Notamment, les systèmes, en particulier le calculateur, peut comprendre un programme informatique comprenant un moyen de code de programme informatique adapté à la réalisation des étapes des procédés objets de l'invention.

Dans le système de transmission, le premier essieu (par exemple l'essieu avant, respectivement l'essieu arrière) est entraîné par défaut par la source de couple. Par contre, le deuxième essieu (par exemple l'essieu arrière, respectivement l'essieu avant) n'est entraîné qu'optionnellement selon l'état du coupleur.

À ce propos, selon l'état du coupleur, le système de transmission présente les quatre modes de fonctionnement suivants:
- un premier mode de transmission où une partie (variable) seulement de la capacité maximale de couple issu de la source de couple et destinée au deuxième essieu est effectivement transmise au deuxième essieu; ce premier mode dénommé «mode AWD Auto» correspondant à un coupleur dit « piloté », c'est-à-dire que le système de commande du coupleur gère automatiquement son fonctionnement, en particulier la quantité de couple transmise ou transmissible,
- un deuxième mode de transmission où la totalité CLock de la capacité maximale de couple issu de la source de couple et destinée au deuxième essieu est effectivement transmise au deuxième essieu ; ce deuxième mode dénommé « mode 4WD Lock » correspondant à un coupleur dit « fermé », c'est-à-dire qu'il est verrouillé dans un état définissant une valeur fixe CLock de couple maximal transmissible,
- un troisième mode de transmission où aucun couple ou seulement un couple négligeable issu de la source de couple est transmis au deuxième essieu ; ce troisième mode dénommé « mode 2WD » correspondant à un coupleur dit « ouvert », c'est-à-dire que le coupleur est désactivé ou qu'il ne transmet qu'une quantité négligeable de couple,
- un quatrième mode de transmission où plus de la totalité CLock de la capacité maximale de couple issu de la source de couple et destinée au deuxième essieu est effectivement transmissible au deuxième essieu ; ce quatrième mode dénommé « mode 4WD SuperLock » correspondant à un coupleur dit « fermé », c'est-à-dire qu'il est verrouillé dans un état définissant une valeur CSuperLock fixe ou variable de couple transmissible, la valeur CSuperLock étant supérieure à celle du couple CLock.

Sur le plan technologique, le coupleur peut être du type à friction, c'est-à-dire qu'il comporte des disques de friction destinés à venir en contact les uns avec les autres pour transmettre le couple et un moyen actionneur pour écarter ou amener ses disques en contact les uns avec les autres. Le moyen actionneur est piloté par le système de commande 12. Le coupleur est par exemple de type embrayage électromagnétique piloté par courant.

Le pilotage du couple transféré par le coupleur doit éviter de trop solliciter les éléments mécaniques de la chaîne cinématique, sous peine de risquer une rupture mécanique. Il faut donc gérer un compromis entre efficacité de franchissement (nécessitant ponctuellement de forts transferts de couple) et fiabilité des éléments mécaniques (mise en danger par des couples importants utilisés fréquemment).

Dans le cas d'un coupleur de type embrayage où ce dernier patine (glisse), il y a friction et, par conséquent, chauffe de l'embrayage. La friction est créée par la différence de vitesse entre l'entrée et la sortie du coupleur, correspondant aux transmissions allant aux trains avant et arrière.

Les procédés et systèmes selon l'invention permettent de fournir un couple supérieur CSuperLock au couple maximal habituellement autorisé CLock dans le mode « 4WD Lock », lorsque certaines conditions sont réunies en mode « 4WD Lock» ou « AWD Auto ». Il y a alors transition du mode « 4WD Lock » ou « AWD Auto » au mode « 4WD SuperLock ». Ce couple supérieur peut permettre à l'embrayage de ne plus glisser et donc de ne plus chauffer.

Cet essai est décrit ci-après en référence à la figure 2. Cette figure représente les variations de la température du coupleur en fonction du temps. On suppose par exemple que le véhicule est dans une phase de franchissement dans laquelle le système de transmission fonctionne en mode « 4WD Lock» ou «AWD Auto». Du fait de la difficulté de franchissement, les vitesses des essieux avant et arrière sont différentes et il se produit un glissement entre les disques de friction dans le coupleur. Cette friction produit un échauffement du coupleur représenté par une portion croissante de la courbe de température du coupleur sur la figure 2. Si rien n'est fait, la température peut continuer à monter comme représenté par la portion de courbe référencée « surchauffe dû au glissement ». Au contraire, grâce à l'invention, le système de transmission peut passer dans le mode « 4WD SuperLock » dans lequel le glissement est annulé. De cette façon, la température du coupleur diminue comme représenté par la portion de courbe référencée «le couple supplémentaire permet de stopper le glissement».

On revient au mode « 4WD Lock » ou « AWD Auto » suivant que certaines conditions sont revenues à des valeurs nominales. Les conditions de transition entre le mode « 4WD Lock » ou « AWD Auto » et le mode « 4WD SuperLock » peuvent être différentes.

La transition vers le mode « 4WD SuperLock » peut, par exemple, être contrôlée par une cartographie en fonction de la vitesse du véhicule.

Dans le mode « 4WD SuperLock », on peut utiliser une saturation, par exemple sous forme de cartographie, agissant comme un gabarit afin de s'assurer que le couple appliqué au coupleur 11 ne dépasse en rien les limites fixées par les stratégies de couple.

Les procédés et systèmes selon l'invention permettent d'appliquer en cas de glissement et/ou d'échauffement du coupleur plus de couple pour tenter de bloquer le glissement. Cette application de couple supplémentaire peut se baser sur une cartographie déterminant la valeur de couple à appliquer. Par la suite, on peut filtrer le couple à appliquer afin de construire un gabarit et ou une saturation.

L'invention permet d'appliquer ou de commander un couple au-delà de la limite maximale de couple habituelle dans les modes de motricité « 4WD Lock » et « AWD Auto ».

L'invention autorise le franchissement ponctuel d'obstacles importants (pente de forte déclivité par exemple) en autorisant un transfert de couple important entre les essieux.

L'invention permet de réduire réchauffement du coupleur.

L'invention permet de diminuer les occurrences des forts couples transférés et donc d'augmenter la durée de vie des éléments mécaniques.

Elle permet en outre de saturer et filtrer le couple envoyé à l'actionneur. Elle est applicable aux véhicules dont l'essieu avant est entraîné par défaut comme aux véhicules dont l'essieu arrière est entraîné par défaut.

Les procédés selon l'invention sont intégrés dans des procédés de fonctionnement globaux gérant les transitions entre les différents modes de fonctionnement du système de transmission selon l'invention.

Les transitions entre les modes « 2WD », « AWD Auto » et « 4WD Lock » sont commandées par le conducteur directement par exemple via un bouton de sélection manuelle. La répartition de couple dans le mode « AWD Auto » est réalisée en fonction de la demande définie par les conditions de roulage. La transition du mode « AWD Auto » vers le mode « 2WD » ou le mode «4WD Lock» peut être effectuée suite à une détection d'un dysfonctionnement.

Dans le quatrième mode « 4WD SuperLock », le couple transmissible est supérieur au couple transmissible dans le mode « 4WD Lock ».

En notant CSuperLock, CLock, CAuto et C2WD, les couples transmissibles par le coupleur respectivement dans les modes « 4WD SuperLock », « 4WD Lock », « AWD Auto » et « 2WD », on peut écrire l'inégalité suivante : CSuperLock > CLock ≥ CAuto ≥ C2WD

Par exemple, les différentes valeurs de couple peuvent être comprises dans les plages suivantes :

| CSuperLock | CLock | CAuto | C2WD |
|---|---|---|---|
| 1000Nm - 1500 Nm | 1500Nm | 0Nm - 1000Nm | 0Nm - 100Nm |

Dans le but de limiter et stopper le glissement de l'embrayage, on applique le couple CSuperLock supérieur au couple maximal habituel. Ce couple ne doit pas être utilisé trop souvent car il sollicite fortement la chaine cinématique. Cette fonction n'est utilisée que lorsque les modes de motricité 4WD Lock et/ou AWD Auto sont activés et que certaines conditions sont rencontrées. Ces conditions peuvent traduire une situation critique où l'on est à la limite de la surchauffe de l'embrayage.

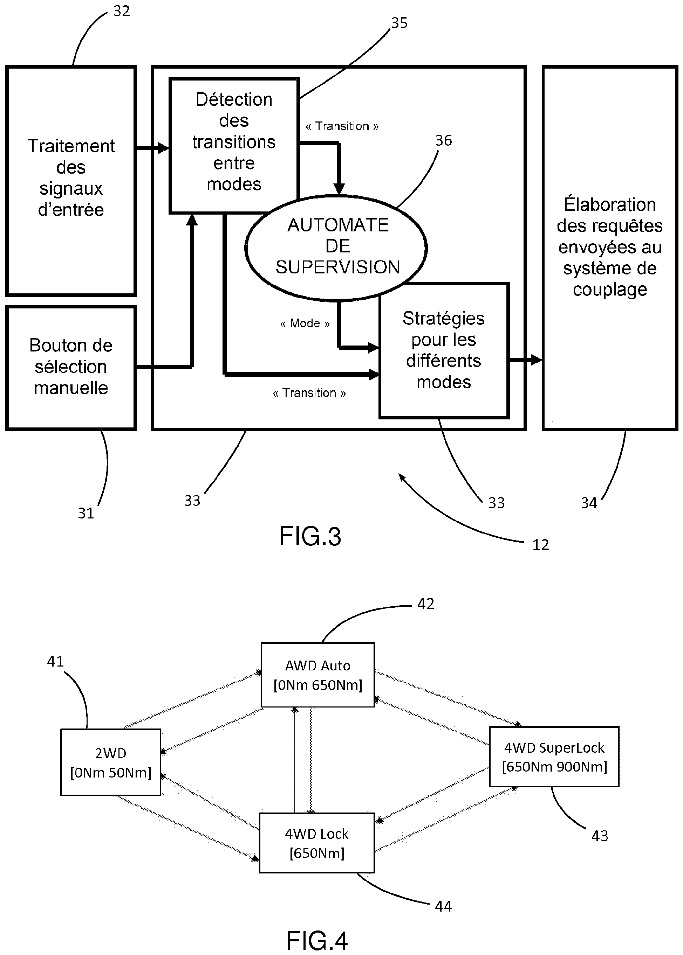

Un exemple d'architecture logicielle du système de commande 12 permettant de mettre en oeuvre l'invention est représentée à la figure 3. Elle comprend un module 31 d'acquisition de la position d'un bouton de sélection de mode de fonctionnement, un module 32 d'acquisition de signaux d'entrée en provenance de différents organes et capteurs du véhicule, un module 33 de traitement de ces acquisitions et un module 34 d'élaboration de commande à envoyer au coupleur 11. Le module 33 comprend un sous-module 35 de détection de transitions de mode de fonctionnement, un sous-module 37 de définition de stratégies relatives aux différents modes de fonctionnement et un automate de supervision 36.

Un premier exemple de mode d'exécution d'un procédé de commande selon l'invention est décrit ci-après.

Le passage au mode « 4WD SuperLock » n'est possible que depuis les modes « 4WD Lock » ou « AWD Auto » Il n'est pas possible depuis le mode « 2WD ».

Pour passer du mode « 4WD Lock » au mode « 4WD SuperLock », il faut que l'ensemble des conditions suivantes soient réunies :
- Couple demandé = CLock, et
- Température (estimée ou mesurée) du coupleur ≥ Premier seuil de température (seuil de température d'alerte d'échauffement) T₁, et
- Glissement (moyenne des vitesses roues avant - moyenne des vitesses roues arrière) ≥ une première valeur seuil (seuil de glissement inter-essieux) G₁ (par exemple de l'ordre de 5 Km/h), et
- Vitesse du véhicule < un premier seuil (seuil bas de vitesse) V0 (par exemple de l'ordre de 20km/h).

On passe ainsi en mode « 4WD SuperLock » seulement si le couple maximum autorisé en mode « 4WD Lock » s'avère insuffisant pour surmonter l'obstacle (ce qui génère un échauffement du coupleur et un glissement entretenu entre les essieux avant et arrière), et ce depuis suffisamment longtemps pour que la température du coupleur se soit élevée au-delà du seuil de température d'alerte d'échauffement T₁.

Pour passer du mode « 4WD SuperLock » au mode « 4WD Lock », il faut que les conditions suivantes soient réunies :
- Température (estimée ou mesurée) du coupleur < deuxième seuil de température (seuil de température normale de fonctionnement) T₀ OU Vitesse du véhicule > deuxième seuil de vitesse (seuil modéré de vitesse) V1 (par exemple de l'ordre de 40km/h), et
- Mode « 4WD Lock » demandé (par exemple par le conducteur via le bouton de sélection).

Pour passer du mode « 4WD SuperLock » au mode « AWD Auto », il faut que les conditions suivantes soient réunies :
- Température (estimée ou mesurée) du coupleur < deuxième seuil de température (seuil de température normale de fonctionnement) T₀ OU Vitesse du véhicule > deuxième seuil de vitesse (seuil modéré de vitesse) V1 (par exemple de l'ordre de 40km/h), et
- Mode « AWD Auto » demandé (par exemple par le conducteur via le bouton de sélection).

Les seuils de températures T₀ et T₁ sont tels que T₀ < T₁. Par exemple : T₀ = 120°C et T₁ = 140°C. La sortie du mode « 4WD SuperLock » est donc autorisée lorsque la température du coupleur a été maitrisée (ce qui suppose que le glissement est maitrisé) ou si la vitesse véhicule devient trop importante pour autoriser de forts couplages.

Un deuxième exemple de mode d'exécution d'un procédé de commande selon l'invention est décrit ci-après.

Dans cette variante, le passage en mode « 4WD SuperLock » n'est plus conditionné par la température, mais uniquement par le glissement. Cela permet de disposer plus rapidement d'un surplus de couple. L'effet sur les prestations de franchissement est positif mais les occurrences d'utilisation du mode « 4WD SuperLock » sont plus nombreuses.

Pour passer du mode « 4WD Lock » au mode « 4WD SuperLock », il faut que l'ensemble des conditions suivantes soient réunies :
- Couple demandé = CLock, et
- Glissement (moyenne des vitesses roues avant - moyenne des vitesses roues arrière) ≥ une première valeur seuil (seuil de glissement inter-essieux) G₁ (par exemple de l'ordre de 5 Km/h), et
- Vitesse du véhicule < un premier seuil (seuil bas de vitesse) V0 (par exemple de l'ordre de 20km/h)

Pour passer du mode « 4WD SuperLock » au mode « 4WD Lock », il faut que les conditions suivantes soient réunies :
- Glissement du coupleur < G₀ avec G₀=0.5×G₁ OU Vitesse du véhicule > deuxième seuil de vitesse (seuil modéré de vitesse) V1 (par exemple de l'ordre de 40km/h), et
- Mode « 4WD Lock » demandé (par exemple par le conducteur via le bouton de sélection)

Pour passer du mode « 4WD SuperLock » en mode « AWD Auto », il faut que les conditions suivantes soient réunies :
- Glissement du coupleur < 0.5×G₁ OU Vitesse du véhicule > deuxième seuil de vitesse (seuil modéré de vitesse) V1 (par exemple de l'ordre de 40km/h), et
- Mode « AWD Auto » demandé (par exemple par le conducteur via le bouton de sélection).

Dans une première variante du procédé de commande, le couple transmissible en mode « 4WD SuperLock » est constant et prend sa valeur maximum, par exemple 1500Nm. Ainsi, le procédé est simple à mettre en oeuvre et il rend rapidement efficace le système de transmission dans des opérations de franchissement.

Dans une deuxième variante du procédé de commande, le couple transmissible en mode « 4WD SuperLock » est variable et vaut au minimum CLock (1000Nm dans notre exemple) et au maximum CSuperLock (1500Nm dans notre exemple). Entre ces deux valeurs, la variation dépend du glissement entre roues avant et roues arrière. Cette variation fonction du glissement peut prendre la forme suivante :
CSuperLock = CLock+a×Glissement (avec une saturation à 1500Nm) a étant une constante positive à déterminer lors d'essais sur véhicule.

Préférentiellement, mais pas nécessairement, cette deuxième variante est associée au deuxième mode d'exécution du procédé.

Cette deuxième variante permet de limiter les occurrences de forts couplages (1500Nm). En effet, seuls les cas ou un tel couplage est vraiment nécessaire (glissement toujours présent si couplage inférieur) entraînent ce couplage maximum. Cela permet notamment de s'affranchir en partie des imprécisions du coupleur. Par exemple, un coupleur qui permettrait de transmettre 1800Nm quand on lui demande de transmettre 1500Nm n'atteindrait jamais ou presque jamais son couple maximum. En effet, il est très peu probable que 1500Nm réellement transférés ne suffisent pas à réduire le glissement. Ainsi, le couple CSuperLock = CLock+a×Glissement n'atteint pas 1500Nm et le couple réellement transféré n'atteint pas 1800Nm.

L'intérêt de cette deuxième variante est donc de limiter d'avantage les occurrences d'utilisation d'un fort couplage. Elle est d'autant plus bénéfique que les coupleurs sont imprécis dans l'obtention du couple de transfert demandé.

La figure 4 présente les différents modes de fonctionnement du système de transmission et les transitions possibles entre ces différents modes. Le mode « 2WD » est représenté par un rectangle 41, le mode « AWD Auto » est représenté par un rectangle 42, le mode « 4WD SuperLock » est représenté par un rectangle 43 et le mode « 4WD Lock » est représenté par un rectangle 44. Il est possible de passer de l'un à n'importe lequel des autres des trois modes suivants : « 2WD », « AWD Auto » et « 4WD Lock ». Par contre, le mode « 4WD SuperLock » ne peut être atteint que depuis les modes « AWD Auto » et « 4WD Lock ».

## Revendications

1. Procédé de commande du fonctionnement d'un moyen (11) de couplage mécanique des premier (17) et deuxième (19) essieux d'un système de transmission (18) d'un véhicule automobile (10), le premier essieu étant entraîné par défaut et le deuxième essieu étant entraîné optionnellement selon l'état du moyen de couplage, le système de transmission étant susceptible de fonctionner selon un premier mode (4WD Lock) dans lequel la valeur du couple transmissible (CLock) par le moyen de couplage mécanique est fixe et maximale ou selon un deuxième mode (4WD SuperLock) dans lequel la valeur du couple transmissible par le moyen de couplage mécanique est supérieure à la valeur du couple (CLock) transmissible maximale dans le premier mode, **caractérisé en ce que** le système de transmission entre dans le deuxième mode de fonctionnement lorsque les conditions suivantes sont réunies :
- la valeur du couple requis est égale à la valeur du couple (CLock) transmissible dans le premier mode, et
- la différence de vitesse des roues des premier et deuxième essieux est supérieure à un premier seuil (G₁), et
- la vitesse du véhicule est inférieure à un premier seuil de vitesse (V0).

2. Procédé de commande selon la revendication 1, **caractérisé en ce que** le système de transmission est susceptible de fonctionner selon un troisième mode (AWD Auto) dans lequel la valeur du couple transmissible (CAuto) est variable et inférieure à la valeur du couple (CLock) transmissible dans le premier mode.

3. Procédé de commande selon la revendication 1 ou 2, **caractérisé en ce que** le système de transmission est susceptible de fonctionner selon un quatrième mode (2WD) dans lequel la valeur du couple transmissible est nulle ou négligeable.

4. Procédé de commande selon l'une des revendications précédentes, **caractérisé en ce que** le système de transmission entre dans le deuxième mode de fonctionnement lorsque la température, par exemple estimée ou mesurée, du moyen mécanique de couplage est supérieure à une première température seuil (T₁).

5. Procédé de commande selon l'une des revendications précédentes, **caractérisé en ce que** le système de transmission sort du deuxième mode de fonctionnement lorsque les conditions suivantes sont réunies :
- la différence de vitesse des roues des premier et deuxième essieux est inférieure à un deuxième seuil (Go avec, par exemple G₀ = 0.5x G₁) ou la vitesse du véhicule est supérieure à un deuxième seuil de vitesse (V1), et
- le premier (4WD Lock) ou le troisième mode (AWD Auto) est requis.

6. Procédé de commande selon l'une des revendications précédentes, **caractérisé en ce que**, dans le deuxième mode (4WD SuperLock), la valeur du couple transmissible par le moyen mécanique de couplage est fixe.

7. Procédé de commande selon l'une des revendications précédentes, **caractérisé en ce que**, dans le deuxième mode (4WD SuperLock), la valeur du couple transmissible par le moyen de couplage mécanique est variable.

8. Procédé de commande selon la revendication précédente, **caractérisé en ce que**, dans le deuxième mode (4WD SuperLock), la valeur du couple transmissible par le moyen de couplage mécanique est dépendant de la différence de vitesse des roues des premier et deuxième essieux, par exemple est une fonction affine de la différence de vitesse des roues des premier et deuxième essieux.

9. Procédé de fonctionnement d'un système de transmission (18) d'un véhicule automobile, le système comprenant un premier essieu (17) entraîné par défaut et un deuxième essieu (19) entraîné optionnellement selon l'état d'un moyen (11) de couplage mécanique des premier et deuxième essieux, le procédé de fonctionnement comprenant une phase de mise en oeuvre du procédé de commande selon l'une des revendications précédentes.

10. Support d'enregistrement de données lisible par un calculateur sur lequel est enregistré un programme informatique comprenant des moyens de codes de programme informatique de mise en oeuvre des étapes du procédé selon l'une des revendications précédentes.

11. Système (12) de commande de l'état d'un moyen (11) de couplage mécanique des premier (17) et deuxième (19) essieux d'un système de transmission (18) d'un véhicule automobile (10), le premier essieu étant entraîné par défaut et le deuxième essieu étant entraîné optionnellement selon l'état du moyen de couplage, **caractérisé en ce qu'**il comprend des moyens matériels et/ou logiciels de mise en oeuvre du procédé selon l'une des revendications 1 à 9.

12. Système de commande selon la revendication précédente, **caractérisé en ce que** les moyens matériels comprennent :
- un moyen de détermination du couple requis sur le deuxième essieu,
- optionnellement, un moyen de détermination de la température du moyen mécanique de couplage,
- un moyen de détermination de la différence de vitesse des roues des premier et deuxième essieux, et
- un moyen de détermination de la vitesse du véhicule.

13. Système de transmission (18) d'un véhicule automobile, comprenant un premier essieu (17) entraîné par défaut et un deuxième essieu (19) entraîné optionnellement selon l'état d'un moyen (11) de couplage mécanique des premier et deuxième essieux et un système (12) de commande du moyen de couplage mécanique selon la revendication 11 ou 12.

14. Véhicule automobile (10) comprenant un système (12) de commande selon la revendication 11 ou 12 ou un système (18) de transmission selon la revendication précédente.

15. Programme informatique comprenant un moyen de code de programme informatique adapté à la réalisation des étapes du procédé selon l'une des revendications 1 à 9, lorsque le programme tourne sur un ordinateur.

## Patentansprüche

1. Verfahren zum Steuern des Betriebs einer mechanischen Kupplungseinrichtung (11) der ersten (17) und zweiten (19) Achsen eines Getriebesystems (18) eines Kraftfahrzeugs (10), wobei die erste Achse standardmäßig angetrieben wird und die zweite Achse wahlweise in Abhängigkeit vom Status der Kupplungseinrichtung angetrieben wird, wobei das Getriebesystem in einem ersten Modus (4WD Lock), in dem der Wert des durch die mechanische Kupplungseinrichtung übertragbaren Drehmoments (CLock) fest und maximal ist, oder in einem zweiten Modus (4WD SuperLock) betrieben werden kann, in dem der Wert des durch die mechanische Kupplungseinrichtung übertragbaren Drehmoments größer ist als der Wert des im ersten Modus maximal übertragbaren Drehmoments (CLock), **dadurch gekennzeichnet, dass** das Getriebesystem in den zweiten Betriebsmodus eintritt, wenn die folgenden Bedingungen erfüllt sind:
- der Wert des erforderlichen Drehmoments ist gleich dem Wert des übertragbaren Drehmoments (CLock) im ersten Modus, und
- die Drehzahldifferenz der Räder der ersten und zweiten Achsen ist größer als ein erster Schwellenwert (G₁), und
- die Geschwindigkeit des Fahrzeugs ist kleiner als ein erster Geschwindigkeitsschwellenwert (V0).

2. Steuerverfahren nach Anspruch 1, **dadurch gekennzeichnet, dass** das Getriebesystem in einem dritten Modus (AWD Auto) betrieben werden kann, in dem der Wert des übertragbaren Drehmoments (CAuto) variabel und kleiner ist als der Wert des übertragbaren Drehmoments (CLock) im ersten Modus.

3. Steuerverfahren nach Anspruch 1 oder 2, **dadurch gekennzeichnet, dass** das Getriebesystem in einem vierten Modus (2WD) betrieben werden kann, in dem der Wert des übertragbaren Drehmoments null oder vernachlässigbar ist.

4. Steuerverfahren nach einem der vorhergehenden Ansprüche, **dadurch gekennzeichnet, dass** das Getriebesystem in den zweiten Betriebsmodus eintritt, wenn die, zum Beispiel geschätzte oder gemessene, Temperatur der mechanischen Kupplungseinrichtung höher ist als eine erste Schwellentemperatur (T₁).

5. Steuerverfahren nach einem der vorhergehenden Ansprüche, **dadurch gekennzeichnet, dass** das Getriebesystem den zweiten Betriebsmodus verlässt, wenn die folgenden Bedingungen erfüllt sind:
- die Drehzahldifferenz der Räder der ersten und zweiten Achsen ist kleiner als ein zweiter Schwellenwert (G₀, mit zum Beispiel G₀ = 0,5xG₁) oder die Geschwindigkeit des Fahrzeugs ist höher als ein zweiter Geschwindigkeitsschwellenwert (V1), und
- der erste (4WD Lock) oder der dritte Modus (AWD Auto) ist erforderlich.

6. Steuerverfahren nach einem der vorhergehenden Ansprüche, **dadurch gekennzeichnet, dass**, im zweiten Modus (4WD SuperLock), der Wert des durch die mechanische Kupplungseinrichtung übertragbaren Drehmoments fest ist.

7. Steuerverfahren nach einem der vorhergehenden Ansprüche, **dadurch gekennzeichnet, dass**, im zweiten Modus (4WD SuperLock), der Wert des durch die mechanische Kupplungseinrichtung übertragbaren Drehmoments variabel ist.

8. Steuerverfahren nach dem vorhergehenden Anspruch, **dadurch gekennzeichnet, dass**, im zweiten Modus (4WD SuperLock), der Wert des durch die mechanische Kupplungseinrichtung übertragbaren Drehmoments von der Drehzahldifferenz der Räder der ersten und zweiten Achsen abhängig ist, zum Beispiel eine lineare Funktion der Drehzahldifferenz der Räder der ersten und zweiten Achsen ist.

9. Verfahren zum Betrieb eines Getriebesystems (18) eines Kraftfahrzeugs, wobei das System eine erste Achse (17) aufweist, die standardmäßig angetrieben wird, und eine zweite Achse (19), die wahlweise in Abhängigkeit vom Status einer mechanischen Kupplungseinrichtung (11) der ersten und zweiten Achsen angetrieben wird, wobei das Verfahren zum Betrieb eine Phase zum Implementieren des Steuerverfahrens nach einem der vorhergehenden Ansprüche aufweist.

10. Rechnerlesbarer Datenträger, auf dem ein Computerprogramm gespeichert ist, das Computerprogrammcodeeinrichtungen zum Implementieren der Schritte des Verfahrens nach einem der vorhergehenden Ansprüche aufweist.

11. System (12) zum Steuern des Status einer mechanischen Kupplungseinrichtung (11) der ersten (17) und zweiten (19) Achsen eines Getriebesystems (18) eines Kraftfahrzeugs (10), wobei die erste Achse standardmäßig angetrieben wird und die zweite Achse wahlweise in Abhängigkeit vom Status der Kupplungseinrichtung angetrieben wird, **dadurch gekennzeichnet, dass** es Hardware- und/oder Software-Einrichtungen zum Implementieren des Verfahrens nach einem der Ansprüche 1 bis 9 aufweist.

12. Steuersystem nach dem vorhergehenden Anspruch, **dadurch gekennzeichnet, dass** die Hardware-Einrichtungen aufweisen:
- eine Einrichtung zum Bestimmen des auf der zweiten Achse erforderlichen Drehmoments,
- wahlweise eine Einrichtung zum Bestimmen der Temperatur der mechanischen Kupplungseinrichtung,
- eine Einrichtung zum Bestimmen der Drehzahldifferenz der Räder der ersten und zweiten Achsen, und
- eine Einrichtung zum Bestimmen der Geschwindigkeit des Fahrzeugs.

13. Getriebesystem (18) eines Kraftfahrzeugs, das eine erste Achse (17), die standardmäßig angetrieben wird, und eine zweite Achse (19), die wahlweise in Abhängigkeit vom Zustand einer mechanischen Kupplungseinrichtung (11) der ersten und zweiten Achsen angetrieben wird, und ein System (12) zum Steuern der mechanischen Kupplungseinrichtung nach Anspruch 11 oder 12 aufweist.

14. Kraftfahrzeug (10), das ein Steuersystem (12) nach Anspruch 11 oder 12 oder ein Getriebesystem (18) nach dem vorhergehenden Anspruch aufweist.

15. Computerprogramm, das eine Computerprogrammcodeeinrichtung aufweist, die für die Ausführung der Schritte des Verfahrens nach einem der Ansprüche 1 bis 9 ausgelegt ist, wenn das Programm auf einem Computer läuft.

## Claims

1. Method for controlling the operation of a means (11) of mechanically coupling the first (17) and second (19) axles of a transmission system (18) of a motor vehicle (10), the first axle being driven as standard and the second axle being driven as an option depending on the state of the coupling means, the transmission system being capable of operating in a first mode (4WD Lock) in which the value of the torque (CLock) that can be transmitted by the mechanical coupling means is fixed and maximum, or in a second mode (4WD SuperLock) in which the value of the torque that can be transmitted by the mechanical coupling means is higher than the maximum value of the torque (CLock) transmittable in the first mode, **characterized in that** the transmission system enters into the second operating mode when the following conditions exist together:
- the required torque value is equal to the value of the torque (CLock) that can be transmitted in the first mode, and
- the difference in speed of the wheels of the first and second axles is higher than a first threshold (G₁), and
- the speed of the vehicle is lower than a first speed threshold (V0).

2. Control method according to Claim 1, **characterized in that** the transmission system is capable of operating in a third mode (AWD Auto) in which the value of the transmittable torque (CAuto) is variable and lower than the value of the torque (CLock) that can be transmitted in the first mode.

3. Control method according to Claim 1 or 2, **characterized in that** the transmission system is capable of operating in a fourth mode (2WD) in which the value of the transmittable torque is zero or negligible.

4. Control method according to one of the preceding claims, **characterized in that** the transmission system enters into the second operating mode when the temperature, for example estimated or measured, of the mechanical coupling means is higher than a first temperature threshold (T₁).

5. Control method according to one of the preceding claims, **characterized in that** the transmission system exits the second operating mode when the following conditions exist together:
- the difference in speed of the wheels of the first and second axles is lower than a second threshold (G₀, where for example, G₀ = 0.5^{x} G₁), or the speed of the vehicle is higher than a second speed threshold (V1), and
- the first mode (4WD Lock) or the third mode (AWD Lock) is required.

6. Control method according to one of the preceding claims, **characterized in that**, in the second mode (4WD SuperLock), the value of the torque that can be transmitted by the mechanical coupling means is fixed.

7. Control method according to one of the preceding claims, **characterized in that**, in the second mode (4WD SuperLock), the value of the torque that can be transmitted by the mechanical coupling means is variable.

8. Control method according to the preceding claim, **characterized in that**, in the second mode (4WD SuperLock), the value of the torque that can be transmitted by the mechanical coupling means is dependent upon the difference in speed of the wheels of the first and second axles, for example, it is an affine function of the difference in speed of the wheels of the first and second axles.

9. Operating method of a transmission system (18) of a motor vehicle, the system including a first axle (17) driven as standard and a second axle (19) driven as an option depending on the state of a means (11) of mechanically coupling the first and second axles, the operating method including an implementation phase of the control method according to one of the preceding claims.

10. Data recording medium that can be read by a computer on which a computer program is recorded, containing computer program code means for implementing the steps of the method according to one of the preceding claims.

11. System (12) for controlling the state of a means (11) of mechanically coupling the first (17) and second (19) axles of a transmission system (18) of a motor vehicle (10), the first axle being driven as standard and the second axle being driven as an option depending on the state of the coupling means, **characterized in that** it includes hardware and/or software means of implementing the method according to one of Claims 1 to 9.

12. Control system according to the preceding claim, **characterized in that** the hardware means include:
- a means of determining the torque required on the second axle,
- optionally, a means of determining the temperature of the mechanical coupling means,
- a means of determining the difference in speed of the wheels of the first and second axles, and
- a means of determining the speed of the vehicle.

13. Transmission system (18) of a motor vehicle, including a first axle (17) driven as standard and a second axle (19) driven as an option depending on the state of a means (11) of mechanically coupling the first and second axles and a system (12) for controlling the mechanical coupling means according to Claim 11 or 12.

14. Motor vehicle (10) including a control system (12) according to Claim 11 or 12 or a transmission system (18) according to the preceding claim.

15. Computer program containing a computer program code means suitable for implementing the steps of the method according to one of Claims 1 to 9 when the program runs on a computer.
